# EUROPEAN PATENT SPECIFICATION

(11) **EP 1 964 811 B1**
(45) Date of publication and mention of the grant of the patent: **30.11.2016**
(21) Application number: 07004178.5
(22) Date of filing: 28.02.2007
(51) Int. Cl.: C01B 21/14

(54) **METHOD FOR PREPARING HYDROXYLAMMONIUM PHOSPHATE**
VERFAHREN ZUR HERSTELLUNG VON HYDROXYLAMMONIUMPHOSPHAT
PROCÉDÉ DE PRÉPARATION DE PHOSPHATE D'HYDROXYLAMMONIUM

(43) Date of publication of application: 03.09.2008
(73) Proprietor: China Petrochemical Development Corporation, Taipei City (TW)
(72) Inventor: Yao, Pin-To c/o China Petrochemical Dev. Corp., Songshan Districk Taipei City (TW); Hseih, Cheng-Fa c/o China Petrochemical Dev., Songshan Districk Taipei City (TW); Hsu, Ren-Hao c/o China Petrochemical Dev. Corp., Songshan Districk Taipei City (TW)
(74) Representative: Epping - Hermann - Fischer

(56) References cited:
- EP-A- 0 431 324
- FR-A- 2 153 390
- GB-A- 1 304 254
- US-A- 3 720 755
- US-A- 3 998 924
- US-A- 4 031 038
- US-A- 4 062 927
- US-A- 4 401 629

## Description

### FIELD OF THE INVENTION

The present invention relates to a method for purifying the phosphate salt processing solution used for hydroxylamine, and more particularly, to a method for preparing hydroxylamine by reduction of nitrate ions with hydrogen.

### BACKGROUND OF THE INVENTION

Industrial preparation of hydroxylamine is usually carried out under a recycling system by combining with other processes, for example, the hydroxylamine-oxime reaction system. In this system, nitric acid and hydrogen are used as starting material, and phosphate salt is used as an inorganic processing solution. Nitrate ions are then reduced to hydroxylamine in the presence of catalysts. The hydroxylamine obtained is subjected to a condensation reaction with cyclohexanone to yield cyclohexanone oxime. After oxime is produced, nitric acid is added to the phosphate processing solution or nitrous gases are introduced and absorbed to form nitric acid, so as to increase the required amount of nitrate ions. Thereafter, the phosphate inorganic processing solution is introduced to a hydroxylamine reactor to generate hydroxylamine. These reactions are shown as follows:

### Preparation of hydroxylammonium phosphate by the reduction nitrate ions

NH₄NO₃+2H₃PO₄+3H₂→NH₃OHH₂PO₄+NH₄H₂PO₄+2H₂O

### Preparation of cyclohexanone oxime by condensation with cyclohexanone

NH₃OH.H₂PO₄ + C₆H₁₀O → C₆H₁₀NOH + H₂O + H₃PO₄

### Supplement of nitrate ions into the phosphate inorganic processing solution

HNO₃ + H₂PO₄⁻ →NO₃⁻ + H₃PO₄

Since the inorganic processing solution containing phosphate salt is recycled during the processing, the quality of the obtained hydroxylamine is directly affected by the quality of the inorganic processing solution. In the inorganic processing solution, phosphate salt is used as an acidic buffer solution. The acidic buffer solution will corrode and dissolve the metal materials apparatuses or facilities and form the metal impurities. The metal of the impurities then decrease the selectivity of hydroxylamine production. For example, US Patent No. 3,767,758 describes that an inorganic processing solution containing molybdenum, rhodium or ruthenium causes a decrease of the selectivity of hydroxylamine production. Further, US Patent No. 4,062,927 discloses that when hydroxylamine is prepared by reduction of nitrate ions or nitrogen monoxide with hydrogen in an acidic solution, the acidic solution can corrode apparatuses or facilities, and thus causes the contamination with heavy metal. Among the heavy metal contaminants, molybdenum contaminants can cause 5∼15% decrease of the selectivity of hydroxylamine production. Therefore, the molybdenum contaminants are removed from the acidic solution by coprecipitation of the molybdenum contaminants together with the ion-ammonium phosphate precipitate.

However, the coprecipitation requires a pH of over 3.5 to give precipitates, and a basic solution is required to adjust the pH of the acidic inorganic processing solution used in the hydroxylamine-oxime recycling system. However, this treatment will increase the costs and the complexity of the processes and the selectivity of the hydroxylamine production is only promoted up to 83%.

US Patent No. 3,720 755 concerns the removal of heavy metal contaminants from phosphoric acid obtained by processing rock phosphate. These contaminants are removed by contacting the acid with hydrogen and platinum-group adsorbent particles, which are subsequently separated from the acid before it is introduced into an acidic buffer solution for the preparation of hydroxylammonium phosphate as a buffering agent.

Therefore, it is desirable to provide a simple process with high selectivity for the preparation of hydroxylamine.

### SUMMARY OF THE INVENTION

To overcome the above-mentioned problems of the prior art, one object of this invention is to provide a method for preparing hydroxylammonium phosphate with a high selectivity of hydroxylammonium phosphate production.

To achieve the aforementioned and other objects, the present invention provides a method for preparing hydroxylammonium phosphate that comprises the steps of: (i) pretreating an acid buffer solution taken from cyclohexanone oxime synthesis with the compounds having a functional group represented by formula (I), in order to remove metal impurities, 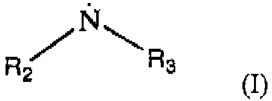 wherein, R₂ and R₃ are as defined below; and (ii) reducing nitrate ions in the acidic buffer solution with hydrogen to yield hydroxylammonium phosphate in the presence of catalysts. Because the acidic buffer solution used for the hydroxylammonium phosphate preparation is pretreated to remove metal impurities, the selectivity of the hydroxylammonium phosphate production significantly increased.

### DETAILED DESCRIPTION OF THE PREFERED EMBODIMENTS

The following embodiments are provided to illustrate the disclosures of the present invention. These and other advantages and effects can be apparently understood by those skilled in the art after reading this specification. The present invention can also be performed or applied by other different embodiments.

In the present invention, nitrate ions in a pretreated acidic buffer solution are reduced to hydroxylammonium phosphate with hydrogen in the presence of catalysts. The acidic buffer solution includes an acidic buffer, nitric acid or nitrate salts, and metal impurities. Examples of the acidic buffer include, for example, sulfuric acid, phosphoric acid, and salts thereof.

In the present invention, the phosphate inorganic processing solution in the hydroxylamine-oxime recycling system is used as the acidic buffer solution for synthesizing hydroxylammoniun phosphate. The acidic buffer solution comprises, based on weight of the whole acidic buffer solution, about 0.15 to 0.18 wt% of hydrogen ions, about 21.4 to 23.7 wt% of phosphate ions, about 4.6 to 5.3 wt% of ammonium ions, about 0.033 to 0.16 wt% of hydroxylammonium ions, about 8.6 to 10.7 wt% of nitrate ions, and tens ppb tens ppm of copper and nickel impurities. Because the metal impurities in the acidic buffer solution can decrease the selectivity of hydroxylammonium phosphate production, a pretreatment must be performed to remove the metal impurities. As used herein, the selectivity of the hydroxylammonium phosphate is defined as follows:
The selectivity of hydroxylammonium phosphate production = 2×(the yield of hydroxylammonium phosphate) / the consumption of hydrogen ions x 100%.

In the present invention, metal impurities are separated from the acidic buffer solution by treating with the compounds having a functional group represented by formula (I), 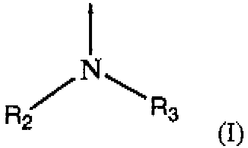 wherein R₂ and R₃ are, independently, those selected from the group consisting of hydrogen atom, phenyl, phenyl substituted by C₁₋₆alkyl, phenyl, substituted by nitro group, phenyl substituted by amino group, phenyl substituted by halogen, heteroaryl having 1 to 3 heteroatoms, XR₄, and polymers, wherein the heteroatom is selected from the group consisting of N, O and S atoms; the heteroaryl is aryl having 6 to 18 carbons; X is chemical bond or alkylene having 1 to 6 carbons; R4 is selected from the group consisting of hydrogen, phenyl, heteroaryl having 1 to 3 heteroatoms, and polymers; and at least one of R₁, R₂, and R₃ is not hydrogen. Preferably, the polymer is polystyrene-divinylbenzene copolymer, R₂ and R₃ are XR₄, and X is methylene, and R₄ is pyridyl.

In this embodiment, the pretreatment of the acidic buffer solution is carried out by flowing through a resin bed having a functional group represented by formula (I). The flowing rate is usually in the range between 0.1 to 40 bed volume (BV)/hour, preferably in the range between 0.1 to 12 BV/hour, more preferably in the range between 0.5 to 4 BV/hour, and furthermore preferably in the range between 1 to 3.5 BV/hour. The pretreatment may be carried out at a temperature of 0°C to 50°C, preferably 10°C to 40°C, and more preferably 10°C to 25°C, but it is not limited to those.

In this embodiment, the phosphate inorganic processing solution in the hydroxylamine-oxime recycling system is used as the acidic buffer solution for preparing hydroxylammonium phosphate. Accordingly, nitrate ions are supplemented to the pretreated acidic buffer solution before performing the hydroxylammonium phosphate synthesis. The amount of nitrate ions in the acidic buffer solution is preferably adjusted to 13 to 18 wt%, and more preferably adjusted to 14 to 16.5 wt %.

In the present invention, the condition for synthesizing hydroxylammonium phosphate is not specially restricted, and those conditions for reducing nitrate ions with hydrogen are all suitable. For example, reaction temperature may be from 20°C to 100°C, preferably from 30°C to 90°C,and more preferably from 40°C to 65°C; and reaction pressure may be from 10 to 30 kg/cm², preferably from 18 to 26 kg/cm², and more preferably from 18 to 24 kg/cm². Examples of catalysts used in the hydroxylammonium phosphate synthesis include, but not limited to, noble metal catalysts such as palladium and palladium-platinium catalysts on GeO₂. Examples of carriers of the catalysts include, but not limited to, carbon and aluminum oxide. Content of the noble metal catalysts is usually, based on weight of the whole carriers and catalysts, between 1 and 25 wt%, preferably between 5 and 15 wt%. Content of catalysts used for hydroxylammonium phosphate synthesis is usually, based on weight of the whole acidic buffer solution, between 0.2 and 5 wt%.

In the present invention, a pretreated acidic buffer solution is used for hydroxylammonium phosphate synthesis, and the selectivity of the hydroxylammonium phosphate production can be significantly enhanced.

### EXAMPLES

### Example 1

A phosphate inorganic processing solution in a hydroxylamine-oxime recycling system was used as an acidic buffer solution for preparing hydroxylammonium phosphate. The composition of the phosphate inorganic solution was analyzed by titration. The content of metals in the phosphate inorganic processing solution was determined by inductively coupled plasma optical emission spectrometry (ICP-OES).

### The results are shown in Table 1.

Then, the phosphate inorganic processing solution was pretreated by passing through a resin bed with a functional group represented by formula (II) at a flow rate of 2 BV/hr,

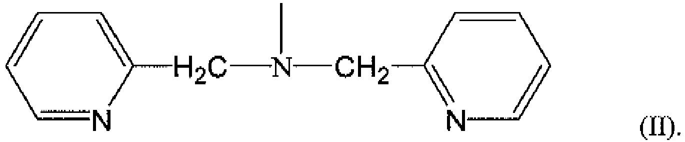

After the pretreatment, a step of absorbing nitric acid was performed. After absorbing nitric acid, the composition of the phosphate inorganic processing solution was analyzed. The results are shown in Table 1.

**Table 1**

| | H⁺ | H₂PO₄⁻ | NH₄⁺ | NH₃OH⁺ | NO₃⁻ |
|---|---|---|---|---|---|
| Composition of inorganic processing solution before pretreatment (wt%) | 0.165 | 22.45 | 5.14 | 0.108 | 10.55 |
| Content of metals in inorganic processing solution before pretreatment | Cu: 2 ppm, Ni: 42.3 ppm | | | | |
| Composition of inorganic processing solution after absorbing nitric acid (wt%) | 0295 | 20.6 | 4.15 | 0.078 | 152 |

Thereafter, hydrogen and nitrogen were introduced into the phosphate inorganic processing solution at 50°C under the pressure of 24kg/cm² in the presence of catalysts. Hydroxylammonium phosphate was obtained. The selectivity for reducing nitrate ions to give hydroxylammonium phosphate is 91.20%.

### Example 2

A phosphate inorganic processing solution in a hydroxylamine-oxime recycling system was used as an acidic buffer solution for preparing hydroxylammonium phosphate. The composition of the phosphate inorganic solution was analyzed by titration. The content of metals in the phosphate inorganic processing solution was determined by ICP-OES. The results are shown in Table 2.

Then, the phosphate inorganic processing solution was pretreated by passing through a resin bed with a functional group represented by formula (II) at a flow rate of 2 BV/hr,

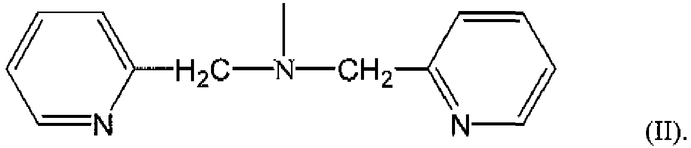

After the pretreatment, a step of absorbing nitric acid was performed. After absorbing nitric acid, the composition of the phosphate inorganic processing solution was analyzed. The results are shown in Table 2.

**Table 2**

| | H⁺ | H₂PO₄⁻ | NH₄⁺ | NH₃OH⁺ | NO₃⁻ |
|---|---|---|---|---|---|
| Composition of inorganic processing solution before pretreatment (wt%) | 0.163 | 22.39 | 5.19 | 0.109 | 10.59 |
| Content of metals in inorganic processing solution before pretreatment | Cu: 5 ppm , Ni: 42.5 ppm | | | | |
| Composition of inorganic processing solution after absorbing nitric acid (wt%) | 0.293 | 20.8 | 4.21 | 0.078 | 15.36 |

Thereafter, hydrogen and nitrogen were introduced into the phosphate inorganic processing solution at 50°C under the pressure of 24kg/cm² in the presence of catalysts. Hydroxylammonium phosphate was obtained. The selectivity for reducing nitrate ions to give hydroxylammonium phosphate is 91.8%.

### Comparative example 1

A phosphate inorganic processing solution in a hydroxylamine-oxime recycling system was used as an acidic buffer solution for preparing hydroxylammonium phosphate. The composition of the phosphate inorganic solution was analyzed by titration. The content of metals in the phosphate inorganic processing solution was determined by ICP-OES. The results are shown in Table 3. Then, a step of absorbing nitric acid was performed. After absorbing nitric acid, the composition of the phosphate inorganic processing solution was analyzed. The results are shown in Table 3.

**Table 3**

| | II⁺ | H₂PO₄⁻ | NH₄⁺ | NH₃OH⁺ | NO₃⁻ |
|---|---|---|---|---|---|
| Composition of inorganic processing solution without pretreatment (wt%) | 0.168 | 22.42 | 5.16 | 0.107 | 10.61 |
| Content of metal in inorganic processing solution without pretreatment | Cu: 60 ppb, Ni: 42.3 ppm | | | | |
| Composition of inorganic processing solution after absorbing nitric acid (wt%) | 0.293 | 20.52 | 4.17 | 0.075 | 15.63 |

Thereafter, hydrogen and nitrogen were introduced into the phosphate inorganic processing solution at 50°C under the pressure of 24kg/cm² in the presence of catalysts. Hydroxylammonium phosphate was obtained. The selectivity for reducing nitrate ions to give hydroxylammonium phosphate is 85.58%.

### Comparative example 2

A phosphate inorganic processing solution in a hydroxylamine-oxime recycling system was used as an acidic buffer solution for preparing hydroxylammonium phosphate. The composition of the phosphate inorganic solution was analyzed by titration. The content of metals in the phosphate inorganic processing solution was determined by ICP-OES. The results are shown in Table 4.

Then, a step of absorbing nitric acid was performed. After absorbing nitric acid the composition of the phosphate inorganic processing solution was analyzed. The results are shown in Table 4.

**Table 4**

| | H⁺ | H₂PO₄⁻ | NH₄⁺ | NH₃OH⁺ | NO₃⁻ |
|---|---|---|---|---|---|
| Composition of inorganic processing solution without pretreatment (wt%) | 0.165 | 22.46 | 5.16 | 0.109 | 10.61 |
| Content of metal in inorganic processing solution without pretreatment | Cu: 2 ppm, Ni: 42.3 ppm | | | | |
| Composition of inorganic processing solution after absorbing nitric acid (wt%) | 0.294 | 20.8 | 4.12 | 0.079 | 15.28 |

Thereafter, hydrogen and nitrogen were introduced into the phosphate inorganic processing solution at 50°C under the pressure of 24kg/cm² in the presence of catalysts. Hydroxylammonium phosphate was obtained. The selectivity for reducing nitratc ions to give hydroxylammonium phosphate is 76.49%.

### Comparative example 3

A phosphate inorganic processing solution in a hydroxylamine-oxime recycling system was used as an acidic buffer solution for preparing hydroxylammonium phosphate. The composition of the phosphate inorganic solution was analyzed by titration. The content of metals in the phosphate inorganic processing solution was determined by ICP-OES. The results are shown in Table 5.

Then, a step of absorbing nitric acid was performed. After absorbing nitric acid, the composition of the phosphate inorganic processing solution was analyzed. The results are shown in Table 5.

**Table 5**

| | H⁺ | H₂PO₄⁻ | NH₄⁺ | NH₃OH⁺ | NO₃⁻ |
|---|---|---|---|---|---|
| Composition of inorganic processing solution without pretreatment (wt%) | 0.168 | 22.39 | 5.18 | 0.109 | 10.66 |
| Content of metals in inorganic processing solution without pretreatment | Cu: 5 ppm, Ni: 42.5 ppm | | | | |
| Composition of inorganic processing solution after absorbing nitric acid (wt%) | 0.294 | 20.85 | 4.18 | 0.075 | 15.24 |

Thereafter, hydrogen and nitrogen were introduced into the phosphate inorganic processing solution at 50°C under the pressure of 24kg/cm² in the presence of catalysts. Hydroxylammonium phosphate was obtained. The selectivity for reducing nitrate ions to give hydroxylammonium phosphate is 51.33%.

According to the results of the examples and the comparative examples, it is found that the method of the present invention can effectively eliminate metal impurities of copper, nickel and the like from the acidic buffer solution prior to the synthesis of hydroxylammonium phosphate, thereby the selectivity for hydroxylammonium phosphate production is obviously promoted.

## Claims

1. A method for preparing hydroxylammonium phosphate, comprising the steps of:
(i) pretreating an acidic buffer solution comprising acidic buffer reagents, nitric acid or nitrate salts, and metal impurities, in order to remove the metal impurities with the compounds having a functional group represented by formula (I), 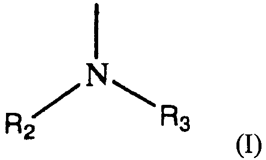 wherein R₂ and R₃ are, independently, those selected from the group consisting of hydrogen atom, phenyl, phenyl substituted by C₁₋₆ alkyl, phenyl substituted by nitro group, phenyl substituted by amino group, phenyl substituted by halogen, heteroaryl having 1 to 3 heteroatoms, -XR₄, and polymers; of those, the heteroatom is selected from the group consisting of N, O and S atoms, the heteroaryl is aryl having 6 to 18 carbons, X is a chemical bond or alkylene having 1 to 6 carbons; R₄ is selected from the group consisting of hydrogen atom, phenyl, heteroaryl having 1 to 3 heteroatoms, and polymers, and at least one of R₁, R₂, and R₃ is not hydrogen; and wherein the acidic buffer solution is taken from oxime reaction in cyclohexanone oxime synthesis; and
(ii) reducing nitrate ions in the acidic buffer solution with hydrogen to give hydroxylammonium phosphate in the presence of catalysts.

2. The method according to claim 1, wherein the polymer is polystyrene-divinylbenzene copolymer.

3. The method according to claim 1, wherein R₂ and R₃ are -XR₄, X is methylene, and R₄ is pyridyl.

4. The method according to claim 1, wherein the acidic buffer solution is pretreated at a temperature of 0°C to 50°C.

5. The method according to claim 4, wherein the acidic buffer solution is pretreated at a temperature of 10°C to 40°C.

6. The method according to claim 5, wherein the acidic buffer solution is pretreated at a temperature of 10°C to 25°C.

7. The method according to claim 1, wherein the metal impurities include copper and nickel.

8. The method according to claim 1, further comprising a step of supplementing nitrate ions into the acidic buffer solution before the step (ii) is carried out.

9. The method according to claim 1, wherein the acidic buffer reagent is selected from the group consisting of sulfuric acid, phosphoric acid, and salts thereof.

## Patentansprüche

1. Verfahren zur Zubereitung von Hydroxylammoniumphosphat, umfassend die folgenden Schritte:
(i) Vorbehandeln einer sauren Pufferlösung, die saure Pufferreagentien, Salpetersäure oder Nitratsalze sowie metallische Verunreinigungen umfasst, um die metallischen Verunreinigungen zu entfernen, wobei die Verbindungen eine funktionelle Gruppe aufweisen, die durch die nachstehende Formel (I) dargestellt wird: 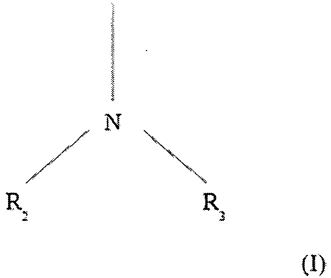 wobei R₂ und R₃ unabhängig ausgewählt sind aus der Gruppe bestehend aus Wasserstoffatom, Phenyl, durch C₁₋₆-Alkyl substituiertes Phenyl, durch eine Nitrogruppe substituiertes Phenyl, durch eine Aminogruppe substituiertes Phenyl, durch Halogen substituiertes Phenyl, Heteroaryl mit 1 bis 3 Heteroatomen, -XR₄ und Polymeren; wobei von diesen das Heteroatom ausgewählt ist aus der Gruppe bestehend aus N-, O- und S-Atomen, das Heteroaryl Aryl mit 6 bis 18 Kohlenstoffen ist, X eine chemische Bindung oder Alkylen mit 1 bis 6 Kohlenstoffen ist; wobei R₄ aus der Gruppe bestehend aus Wasserstoffatom, Phenyl, Heteroaryl mit 1 bis 3 Heteroatomen und Polymeren ausgewählt ist und wenigstens eines von R₁, R₂ und R₃ nicht Wasserstoff ist; und wobei die saure Pufferlösung von einer Oximreaktion in einer Cyclohexanonoximsynthese bezogen wird; und
(ii) Reduzieren von Nitrationen in der sauren Pufferlösung mit Wasserstoff, um Hydroxylammoniumphosphat zu ergeben, in Anwesenheit von Katalysatoren.

2. Verfahren nach Anspruch 1, wobei das Polymer Polystyrol-Divinylbenzol-Copolymer ist.

3. Verfahren nach Anspruch 1, wobei R₂ und R₃ -XR₄ sind, X Methylen ist und R₄ Pyridyl ist.

4. Verfahren nach Anspruch 1, wobei die saure Pufferlösung bei einer Temperatur von 0°C bis 50°C vorbehandelt wird.

5. Verfahren nach Anspruch 4, wobei die saure Pufferlösung bei einer Temperatur von 10°C bis 40°C vorbehandelt wird.

6. Verfahren nach Anspruch 5, wobei die saure Pufferlösung bei einer Temperatur von 10°C bis 25°C vorbehandelt wird

7. Verfahren nach Anspruch 1, wobei die Metallverunreinigungen Kupfer und Nickel umfassen.

8. Verfahren nach Anspruch 1, ferner umfassend einen Schritt des Hinzufügens von Nitrationen in die saure Pufferlösung vor Ausführung von Schritt (ii).

9. Verfahren nach Anspruch 1, wobei das saure Pufferreagens aus der Gruppe bestehend aus Schwefelsäure, Phosphorsäure und deren Salzen ausgewählt wird.

## Revendications

1. Un procédé de préparation de phosphate d'hydroxylammonium comprenant les étapes suivantes:
(i) le pré-traitement d'une solution tampon acide comprenant des réactifs de tampon acide, de l'acide nitrique ou des sels de nitrate, et des impuretés métalliques, afin d'éliminer les impuretés métalliques avec des composés ayant un groupe fonctionnel représenté par la formule (I), 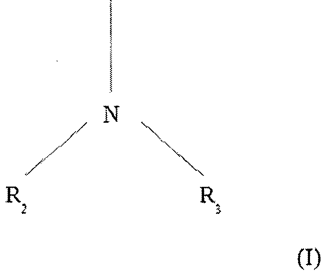 dans laquelle R₂ et R₃ sont, d'une manière indépendante, choisis parmi le groupe constitué par un atome d'hydrogène, un groupe phényle, un groupe phényle substitué par de l'alkyle C₁₋₆, un groupe phényle substitué par un groupe nitro, un groupe phényle substitué par un groupe amino, un groupe phényle substitué par de l'halogène, un groupe hétéroaryle ayant 1 à 3 hétéroatomes, -XR₄, et des polymères; parmi eux, l'hétéroatome est choisi parmi le groupe constitué par des atomes de N, O et S, le hétéroaryle est aryle ayant 6 à 18 atomes de carbone, X est une liaison chimique ou un alkyle ayant 1 à 6 atomes de carbone; R₄ est choisi parmi le groupe constitué par un atome d'hydrogène, un phényle, un hétéroaryle ayant 1 à 3 hétéroatomes et des polymères, et au moins un parmi R₁, R₂ et R₃ n'est pas de l'hydrogène; et dans laquelle la solution tampon acide est obtenue à partir d'une réaction d'oxime dans une synthèse d'oxime de cyclohexanone; et
(ii) la réduction d'ions nitrates dans la solution tampon acide avec de l'hydrogène pour donner du phosphate d'hydroxylammonium en présence de catalyseurs.

2. Le procédé selon la revendication 1, dans lequel le polymère est un copolymère polystyrène-divinylbenzène.

3. Le procédé selon la revendication 1, dans lequel R₂ et R₃ sont -XR₄, X étant du méthylène et R₄ étant du pyridyle.

4. Le procédé selon la revendication 1, dans lequel la solution tampon acide est pré-traitée à une température qui va de 0°C à 50°C.

5. Le procédé selon la revendication 4, dans lequel la solution tampon acide est pré-traitée à une température qui va de 10°C à 40°C.

6. Le procédé selon la revendication 5, dans lequel la solution tampon acide est pré-traitée à une température qui va de 10°C à 25°C.

7. Le procédé selon la revendication 1, dans lequel les impuretés métalliques comprennent du cuivre et du nickel.

8. Le procédé selon la revendication 1, comprenant en outre une étape dans laquelle des ions nitrates complètent la solution tampon acide avant que l'étape (ii) soit exécutée.

9. Le procédé selon la revendication 1, dans lequel le réactif de tampon acide est choisi parmi le groupe constitué par l'acide sulfurique, l'acide phosphorique et leurs sels.
